(19) Europäisches Patentamt
European Patent Office
Office européen des brevets

(11) Publication number: 0 443 351 A2

(12) **EUROPEAN PATENT APPLICATION**

(21) Application number: 91101271.4

(22) Date of filing: 31.01.91

(51) Int. Cl.5: C08G 59/68, C08G 59/72, C08G 59/18, C08G 59/62, B01J 31/00

(30) Priority: 06.02.90 US 477410

(43) Date of publication of application: 28.08.91 Bulletin 91/35

(84) Designated Contracting States: AT BE CH DE DK ES FR GB IT LI NL SE

(71) Applicant: THE DOW CHEMICAL COMPANY
2030 Dow Center Abbott Road
Midland, MI 48640(US)

(72) Inventor: Muskopf, John W.
119 Mistletoe
Lake Jackson, Texas 77566(US)
Inventor: Bertram, James L.
115 Southern Oak Drive
Lake Jackson, Texas 77566(US)
Inventor: Walker, Louis L.
246 Barbara Drive
Clute, Texas 77531(US)

(74) Representative: Sternagel, Hans-Günther, Dr. et al
Patentanwalte Dr. Michael Hann, Dr. H.-G. Sternagel, Dr. H. Dorries Sander Aue 30
W-5060 Bergisch Gladbach 2(DE)

(54) **Latent,curable catalyzed mixtures of epoxy-containing and phenolic hydroxyl-containing compounds containing compounds or complexes formed from contacting organic phosphines or arsines with weak nucleophilic acids.**

(57) The products resulting from contacting an organic phosphine or arsine with an inorganic acid having a weak nucleophilic anion provide for relatively stable compositions when admixed with a compound containing an average of more than one vicinal epoxide group per molecule and which optionally contains a compound containing an average of more than one phenolic hydroxyl group per molecule.

EP 0 443 351 A2

# LATENT, CURABLE, CATALYZED MIXTURES OF EPOXY-CONTAINING AND PHENOLIC HYDROXYL-CONTAINING COMPOUNDS CONTAINING COMPOUNDS OR COMPLEXES FORMED FROM CONTACTING ORGANIC PHOSPHINES OR ARSINES WITH WEAK NUCLEOPHILIC ACIDS

The present invention concerns latent, curable, catalyzed mixtures of epoxy-containing compounds and aromatic hydroxyl-containing compounds. The present invention also concerns latent catalysts and epoxy resin compositions containing them.

Epoxy resins have been precatalyzed with phosphonium and other compounds to provide latent compositions which form advanced, higher molecular weight epoxy resins when admixed with an aromatic hydroxyl-containing compound as disclosed by Perry in U.S. 3,948,855 and Can. 893,191; by Dante et al. in U.S. 3,477.990; by Mueller et al. in U.S. 3,547,881; by Tyler, Jr. et al. in U.S. 4,366,295; and by Cragar in Can. 858,648.

While compositions containing these catalysts and an epoxy resin are somewhat stable, such compositions which also contain an aromatic hydroxyl-containing compound are lacking in stability.

One aspect of the present invention pertains to new latent catalysts for epoxy resins characterized by the adducts, complexes or compounds resulting from (1) contacting (a) at least one organic phosphine or organic arsine with (b) an inorganic acid having a weak-nucleophilic anion or a combination of such acids; or (2) contacting (a) at least one adduct of an acid having a relatively strong-nucleophilic anion and an organic phosphine or organic arsine with (b) an inorganic acid or metal salt of an inorganic acid, said acid having a weak-nucleophilic anion or a combination of such acids or metal salts; wherein components (a) and (b) are contacted in quantities which provide a molar ratio of component (a) to component (b) of from 0.6:1 to 1.4:1; with the proviso that when component (1-a) is a phosphine, it is a phosphine other than triphenyl phosphine.

Another aspect of the present invention pertains to new latent catalysts for epoxy resins characterized by adducts, complexes or compounds represented by the following Formulas I or II.

Formula I.

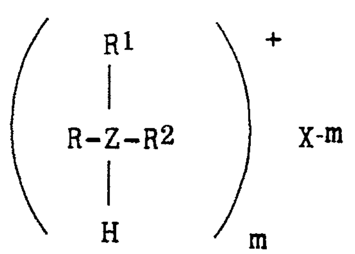

Formula II.

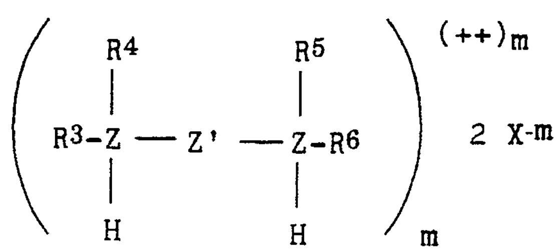

wherein each R, $R^1$, $R^2$, $R^3$, $R^4$, $R^5$ and $R^6$ is independently a hydrocarbyl group having from 1 to 18 carbon atoms or two of such R, $R^1$, or $R^2$ groups or $R^3$ and $R^4$ groups or $R^5$ and $R^6$ groups can combine to form a heterocyclic ring; each X is the anion portion of a relatively weak nucleophilic acid; Z is P or As; Z' is a divalent hydrocarbyl group having from 1 to 10 carbon atoms; and m has a value equal to the valence of the anion X; and with the proviso that at least one such R, $R^1$ or $R^2$ group in Formula I is a group other than a phenyl group and with the proviso that at least one such $R^3$, $R^4$, $R^5$ or $R^6$ group in Formula II is a group other than methyl when Z' is a $-CH_2-CH_2-$ group.

Another aspect of the present invention pertains to compositions characterized by (A) at least one compound containing an average of more than one epoxide group per molecule; and (B) at least one of (1) the product resulting from contacting (a) at least one organic phosphine or arsine with (b) an inorganic acid having a weak-nucleophilic anion or a combination of such acids; or (2) the product resulting from

contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; wherein (i) components (a) and (b) are contacted in quantities which permit the composition to satisfy the viscosity requirements of the composition after storage at 50° C for 14 days; and (ii) a mixture of components (A), and (B), when dissolved in 20 to 40 percent by weight of a suitable solvent or solvent mixture has a viscosity measured at 25° C of 75% or less, preferably 10% or less, more preferably 1% or less, than the viscosity of a like composition except that the catalyst consists only of component (a), said viscosity being determined after storage for 14 days at 50° C.

Another aspect of the present invention pertains to compositions characterized by (A) at least one compound containing an average of more than one epoxide group per molecule; (B) at least one catalyst selected from the group consisting of (1) the product resulting from contacting (a) at least one organic phosphine or arsine with (b) an inorganic acid having a weak-nucleophilic anion or a combination of such acids; and (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; and (B) at least one compound containing an average of more than one aromatic hydroxyl group per molecule; wherein (i) components (a) and (b) are contacted in quantities which permit the composition to satisfy the viscosity requirements of the composition after storage at 50° C for 14 days; (ii) components (A) and (B) are present in quantities which provide a ratio of aromatic hydroxyl groups to epoxide group of from 0.05:1 to 20:1; and (iii) a mixture of components (A), (B), and (C), when dissolved in 20 to 40 percent by weight of a suitable solvent or solvent mixture, has a viscosity measured at 25° C of 75% or less, preferably 10% or less, more preferably 1% or less, than the viscosity of a like composition except that the catalyst consists only of component (a), said viscosity being determined after storage for 14 days at 50° C.

The term weak-nucleophilic as employed herein means that the compound has a nucleophilicity value "n" of from zero to less than 2.5 as described by C. G. Swain and C. B. Scott in J. Am. Chem. Soc., Vol. 75, p. 141 (1953) which is incorporated herein by reference. The nucleophilicity value "n" for the weak-nucleophile can be from 1 to less than 2.7__ , preferably from 1.1 to 2.5, more preferably from 1.1 to 2.

The term relatively strong-nucleophilic as employed herein means that the material has a nucleophilicity value "n" of 2.5 or greater as described by C. G. Swain and C. B. Scott in J. Am. Chem. Soc., Vol. 75, p. 141 (1953) which is incorporated herein by reference. The nucleophilicity value "n" for the strong-nucleophile is from 2.7 to about 6.6, preferably from 2.8 to 5.5, more preferably from 3 to 5.

The catalysts employed in the present invention are prepared by simply mixing in the desired proportions and stirring to insure intimate contact, the phosphine or arsine compound with the acid or salt of an acid having a weak-nucleophilic anion. The contact can be conducted at temperatures of from 0° C to 100° C, preferably from 20° C to 60° C for a time sufficient to complete any reaction which occurs. The time depends upon the temperature, but usually from 1 to 120, preferably from 5 to 60 minutes is sufficient. Pressures from subatmospheric to superatmospheric can be employed in blending the components. Preferably the pressure is from 1 mm Hg to 7,600 mm Hg, more preferably from 200 mm Hg to 2,280 mm Hg absolute.

The components from which the catalysts are prepared are mixed in proportions which provide from 0.6 to 1.4, preferably from 0.75 to 1.35, most preferably form 0.95 to 1.2, moles of acid (b) per mole of phosphine or arsine compound (a); or the molar ratio of inorganic acid or metal salt of such acid which has a weak-nucleophilic anion (b) to an adduct of an acid having a relatively strong-nucleophilic anion and an organic phosphine or arsine (b) is from 0.6 to 1.4, preferably from 0.75 to 1.35, most preferably form 0.95 to 1.2.

The catalyst is employed in amounts sufficient to catalyze the reaction between the epoxy-containing compound, component (A) and the aromatic hydroxyl-containing compound component (C) when heated to a temperature of at least 75° C up to 250° C, preferably from 90° C to 225° C, more preferably from 100° C to 200° C. In most instances, the quantity of catalyst is from 0.05 to 100, suitably from 0.1 to 50, more suitably from 0.5 to 20, most suitably from 1 to 10 millimoles of catalyst per epoxide equivalent.

Suitable phosphine or arsine compounds which can be employed to prepare the catalysts include those represented by the following formulas III or IV

Formula III.

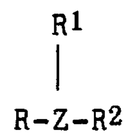

Formula IV.

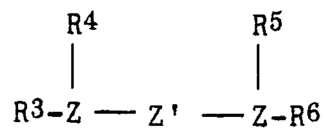

wherein each R, $R^1$, $R^2$, $R^3$, $R^4$, $R^5$ and $R^6$ is independently a hydrocarbyl or hydrocarbyloxy group having suitably from 1 to 18, more suitably from 1 to 9, most suitably from 1 to 6, carbon atoms or two of such R, $R^1$, or $R^2$ groups or $R^3$ and $R^4$ or $R^5$ and $R^6$ groups can combine to form a heterocyclic ring; and Z is P or As. Particularly suitable phosphine compounds include, for example, triphenylphosphine, trimethylphosphine,
tripropylphosphine, tributyl phosphine,
tripentylphosphine, triheptylphosphine,
trioctylphosphine, trinonylphosphine, tridecylphosphine,
triundecyphosphine, tridodecylphosphine,
bis(diphenylphosphino)-methane,
1,2- bis(diphenylphosphino)-ethane,
1,3- bis(diphenylphosphino)-propane,
1,2- bis(dimethylphosphino)-ethane,
1,3- bis(dimethylphosphino)-propane, or any combination thereof. Particularly suitable arsine compounds include, for example, triphenyl arsine, tributyl arsine, or combination thereof.

Particularly suitable inorganic acids having a weak nucleophilic anion include, for example, fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid or any combination thereof. Most particularly suitable such acid is fluoboric acid.

Fluoboric acid is sometimes referred to as fluoroboric acid or hydrogen tetrafluoroborate. Any of these expressions refer to the chemical represented by the formula, $HBF_4$.

Suitable metal salts of inorganic acids free from any organic substituents and having a weak nucleophilic anion include, for example those metals of Groups I and II of the Periodic Table of the Elements published by Sargent-Welch Scientific Company as catalog number S-18806. Particularly such salts include, for example, the alkali and alkaline earth metal salts such as the sodium, potassium, lithium, calcium, barium, and magnesium as well as the silver salts of such inorganic acids.

Suitable compounds having an average of more than one epoxide group per molecule which can be employed herein include, epoxy resins such as, for example, the glycidyl ethers of polyhydric phenols such as dihydroxy phenols, biphenols, bisphenols, halogenated bisphenols, alkylated bisphenols, trisphenols, phenol-aldehyde novolac resins, substituted phenol-aldehyde novolac resins, phenol-hydrocarbon resins, substituted phenol-hydrocarbon resins, any combination thereof and the like. Suitable such epoxy resins include, for example, those represented by the following formulas V-IX.

Formula V.

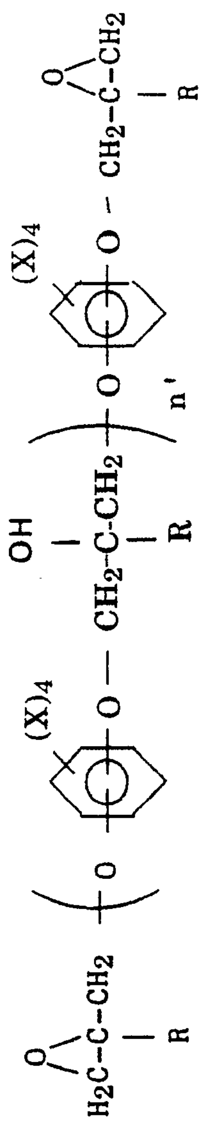

Formula VI.

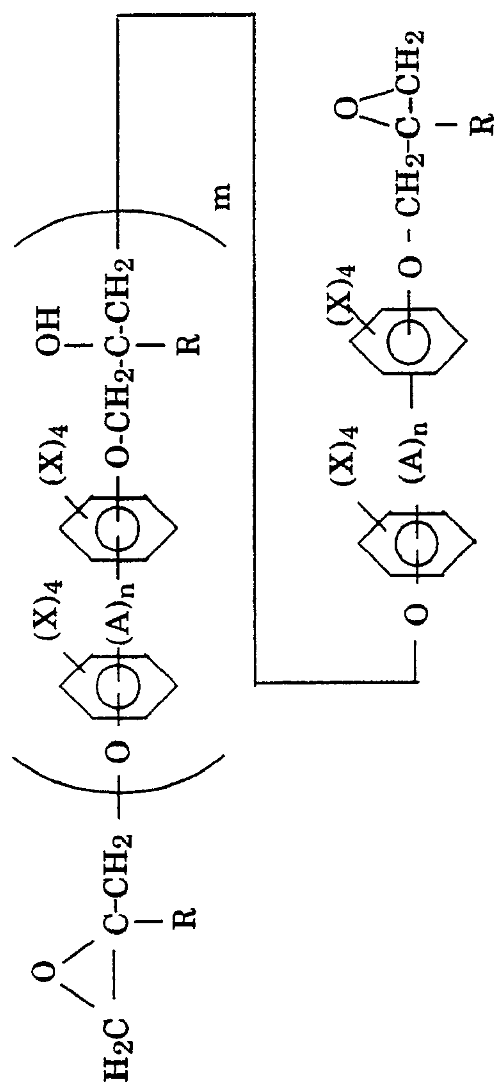

Formula VII.

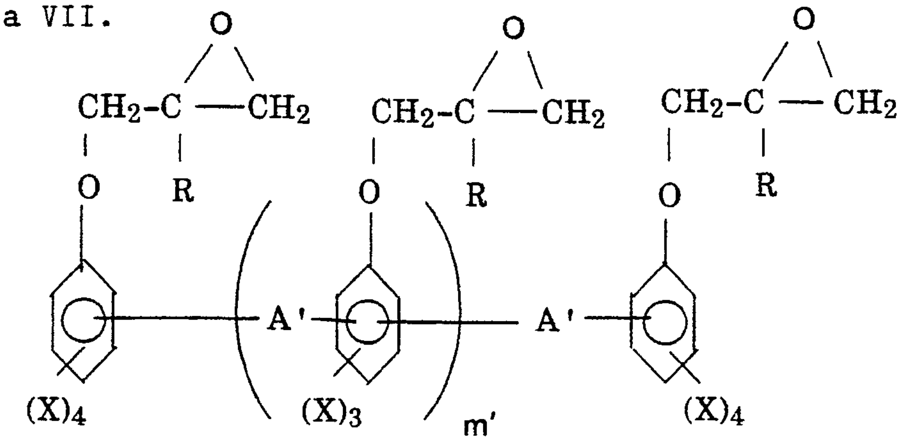

Formula VIII.

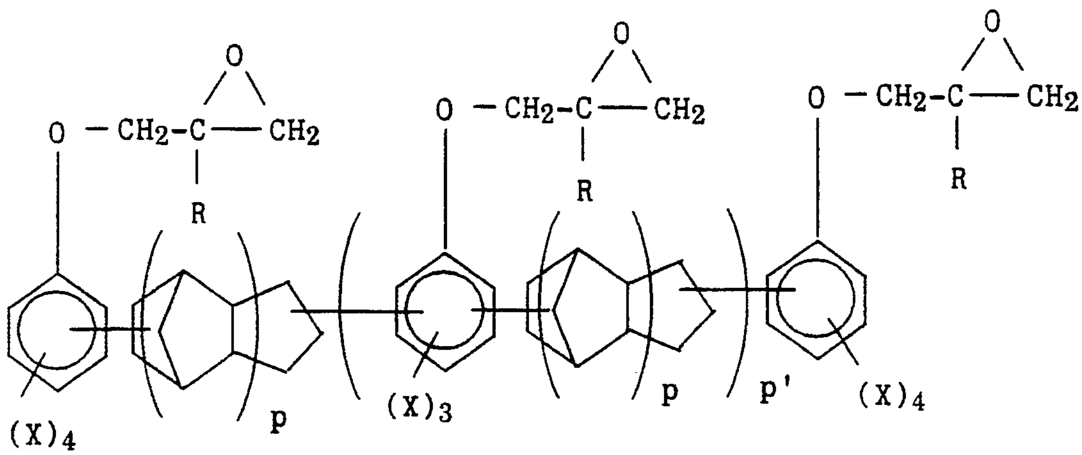

Formula IX.

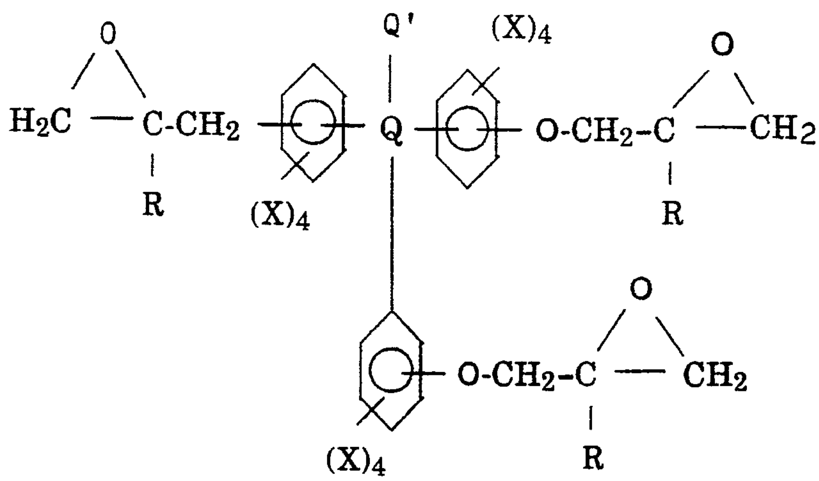

wherein each A is independently a divalent hydrocarbyl group having from 1 to 9, preferably from 1 to 4, carbon atoms, -O-, -S-, -S-S-, -SO-, $-SO_2-$, or -CO-; each A' is independently a divalent hydrocarbyl group

having from 1 to 9, preferably from 1 to 4 carbon atoms; Q is a hydrocarbyl group having from 1 to 10 carbon atoms; Q' is hydrogen, halogen, cyano or an alkyl group having from 1 to 4 carbon atoms; each R is independently hydrogen, halogen, cyano or an alkyl group having from 1 to 4 carbon atoms; each X is independently hydrogen, bromine, chlorine, or a hydrocarbyl or hydrocarbyloxy group having from 1 to 9, preferably from 1 to 4 carbon atoms; m has an average value from zero to 12, preferably from zero to 9, most preferably from 0.03 to 3; m' has an average value from 0.01 to 8, preferably from 0.2 to 6, more preferably from 0.5 to 4; n has a value of zero or 1; n' has an average value of from zero to 12, preferably from zero to 9, most preferably from 0.03 to 3; each p suitably has a value from zero to 10, more suitably from zero to 6, most suitably from 1 to 3; and each p' suitably has a value from zero to 8, more suitably from 1 to 6, most suitably from 2 to 4. Also suitable are the oligomers of the epoxy resin represented by formula IX.

The term hydrocarbyl as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term hydrocarbyloxy means a hydrocarbyl group having an oxygen linkage between it and the carbon atom to which it is attached.

Particularly suitable such epoxy resins include, for example, the diglycidyl ethers of resorcinol, catechol, hydroquinone, biphenol, bisphenol A, bisphenol F, bisphenol K, tetrabromobisphenol A, phenol-formaldehyde novolac resins, alkyl substituted phenol-formaldehyde resins, phenol-hydroxybenzaldehyde resins, cresol-hydroxybenzaldehyde resins, dicyclopentadiene-phenol resins, dicyclopentadiene-substituted phenol resins tetramethylbiphenol, tetramethyl-tetrabromobiphenol, tetramethyltribromobiphenol, tetrachlorobisphenol A, any combination thereof and the like.

Also suitable as the epoxide compound which can be employed in the present invention include those partially advanced epoxy resins disclosed by Bertram et al. in U.S. 4,594,291 which is incorporated herein by reference.

Also suitable as the epoxide compound are the glycidyl ethers of compounds having an average of more than one aliphatic hydroxyl group per molecule such as, for example, the glycidyl ethers of aliphatic diols, polyether diols, polyether triols, polyether tetrols, or any combination thereof. Also suitable are the alkylene oxide adducts of compounds containing an average of more than one aromatic hydroxyl group per molecule such as, for example, the ethylene oxide, propylene oxide, or butylene oxide adducts of dihydroxy phenols, biphenols, bisphenols, halogenated bisphenols, alkylated bisphenols, trisphenols, phenol-aldehyde novolac resins, halogenated phenol-aldehyde novolac resins, alkylated phenol-aldehyde novolac resins, hydrocarbon-phenol resins, hydrocarbon-halogenated phenol resins, or hydrocarbon-alkylated phenol resins, or any combination thereof.

Suitable aromatic hydroxyl containing compounds which can be employed herein include, for example, compounds having an average of more than one phenolic hydroxyl group per molecule. Suitable such compounds include, for example, dihydroxy phenols, biphenols, bisphenols, halogenated bisphenols, alkylated bisphenols, trisphenols, phenol-aldehyde resins, halogenated phenol-aldehyde novolac resins, alkylated phenol-aldehyde novolac resins, phenol-hydroxybenzaldehyde resins, alkylated phenol-hydroxybenzaldehyde resins, hydrocarbon-phenol resins, hydrocarbon-halogenated phenol resins, hydrocarbon-alkylated phenol resins, or any combination thereof. Particularly suitable aromatic hydroxyl containing compounds include, for example, those represented by the following formulas X-XIII

Formula X.

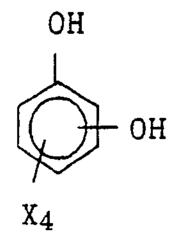

Formula XI.

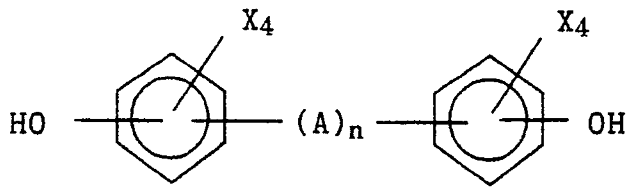

Formula XII.

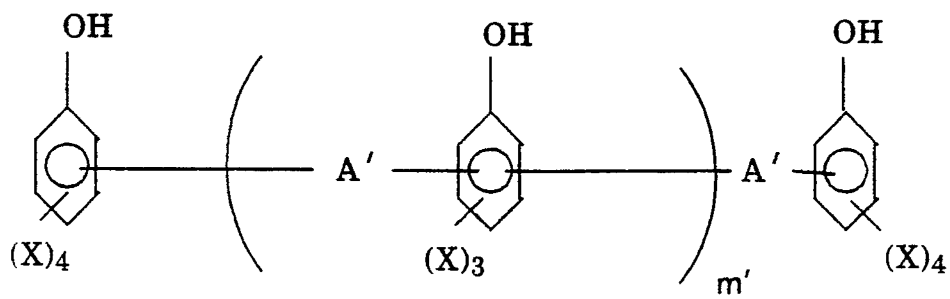

Formula XIII.

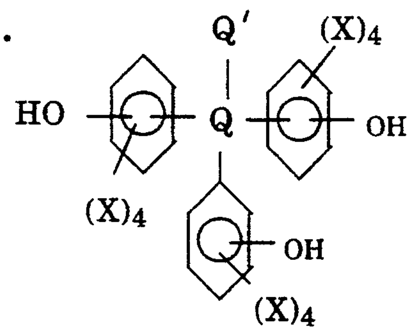

wherein A, A', Q, Q' X, n and m are as defined above in formulas V-IX. Particularly suitable aromatic hydroxyl-containing materials include, for example, biphenol, bisphenol A, bisphenol K, tetrabromobisphenol A, tetrabromobisphenol K, resorcinol, phenol-aldehyde novolac resins, cresol-aldehyde novolac resins, phenol-hydroxybenzaldehyde resins, cresol-hydroxybenzaldehyde resins, tetramethylbiphenol, tetramethyltribromobiphenol, tetramethyltetrabromobiphenol, tetrachorobisphenol A, or any combination thereof. Also suitable are the oligomers of the multifunctional phenolic compounds represented by the formula XIII.

These and other suitable aromatic hydroxyl-containing compounds are disclosed in U.S. Patent No. 4,594,291 issued June 10, 1986 to Bertram et al.

The aromatic hydroxyl-containing compounds are employed in amounts which provide a ratio of aromatic hydroxyl groups to epoxy groups suitably from 0.05:1 to 20:1, more suitably from 0.1:1 to 10:1, most suitably from 0.2:1 to 5:1.

The precatalyzed compositions of the present invention can contain, if desired, pigments, fillers, dyes, diluents, solvents, stabilizers, epoxy resin curing agents, or any combination thereof.

Suitable stabilizer materials and curing agents which can be employed herein include, for example, those disclosed in the aforementioned U.S. Patent No. 4,594,291 by Bertram et al.

Particular suitable solvents or diluents include, for example, aliphatic and aromatic hydrocarbons, alcohols, ketones, glycol ethers, glycol esters, combinations thereof and the like. Particularly suitable solvents or diluents include, for example, ethylene glycol monobutyl ether (2-butoxyethanol), diethyleneglycol monopropyl ether, diethylene glycol monobutyl ether, diethylene glycol monohexyl ether monopropyl ether, propylene glycol monobutyl ether, propylene glycol tertiary butyl ether, propylene glycol isopropyl ether, dipropylene glycol monobutyl ether, ethylene glycol phenyl ether, propylene glycol phenyl ether, toluene, xylene, propylene glycol methyl acetate ether, or any combination thereof.

The compositions of the present invention are useful in the preparation of formulations for use in the preparation of electrical and structural laminates and composites, coatings, castings, moldings, or encapsulants. They can be employed in the conventional methods or the newer reaction transfer molding (RTM) and reaction injection molding (RIM) techniques.

The following examples are illustrative of the invention but are not to be construed as to limiting the scope thereof in any manner.

EXAMPLE 1

A 30% solution of a 1:1 molar ratio of triphenylphosphine/fluoroboric acid complex was made by adding 2.98 g (0.01906 mol) of a 56.1% solution of fluoroboric acid in water to a solution of 5.00 g (0.01906 mol) of triphenylphosphine in 14.26 g of tetrahydrofuran. The mixture was stirred at 25° C for 5 minutes to insure intimate mixing. The concentration of the aqueous fluoroboric acid was determined by potentiometric titration to the first inflection point with 0.100 N potassium hydroxide in methanol. An MCI GT-05 Automatic Titrator and a combination silver/silver chloride electrode (Curtain Matheson Scientific No. 201-947) were used to measure the pH changes during the course of the titration.

EXAMPLE 2

A 30% solution of a 1.00:1.10 molar ratio of triphenylphosphine/fluoroboric acid complex was made by adding 3.28 g (0.0210 mol) of 56.1% solution of fluoroboric acid in water to a solution of 5.00 g (0.01906 mol) of triphenylphosphine in 14.52 g of tetrahydrofuran. The mixture was stirred at 25° C for 5 minutes to insure intimate mixing. The concentration of the aqueous fluoroboric acid was determined as in Example 1.

EXAMPLE 3

A 30% solution of a 1:1 molar ratio of tributylphosphine/fluoroboric acid complex was made by adding 1.93 g (0.01236 mol) of a 56.1% solution of fluoroboric acid in water to a solution of 2.50 g (0.01236 mol) of triphenylphosphine in 7.52 g of tetrahydrofuran. The mixture was stirred at 25° C for 5 minutes to insure intimate mixing. The concentration of the aqueous fluoroboric acid was determined as in Example 1.

EXAMPLE 4

A 30% solution of a 1:1 molar ratio of 1,3-bis(diphenylphosphino)propane/fluoroboric acid complex was made by adding 1.52 g (0.00972 mol) of a 56.1% solution of fluoroboric acid in water to a solution of 2.00 g (0.00484 mol) of 1,3-bis(diphenylphosphino)propane in 5.99 g of tetrahydrofuran. The mixture was stirred at 25° C for 5 minutes to insure intimate mixing. The concentration of the aqueous fluoroboric acid was determined as in Example 1.

EXAMPLE 5

1.71 g (18 mmol catalyst/mol epoxide) of the 30% catalyst solution described in Example 1 was added to 30.0 g of a 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50° C oven and the 25° C viscosity was monitored after 0, 0.3, 1, 7, and 14 days. The results are provided in Table I.

EXAMPLE 6

1.75 g (18 mmol catalyst/mol epoxide) of the 30% catalyst solution described in Example 2 was added to 30.0 g of 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50 °C oven and the 25 °C viscosity was monitored after 0, 1, 7, and 14 days. The results are provided in Table I.

EXAMPLE 7

1.41 g (18 mmol catalyst/mol epoxide) of the 30% catalyst solution described in Example 3 was added to 30.0 g of 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50 °C oven and the 25 °C viscosity was monitored after 0, 0.3, 1, 7, and 14 days. The results are provided in Table I.

EXAMPLE 8

1.43 g (18 mmol catalyst/mol epoxide) of the 30% catalyst solution described in Example 4 was added to 30.0 g of 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50 °C oven and the 25 °C viscosity was monitored after 0, 1, 7, and 14 days. The results are provided in Table I.

COMPARATIVE EXPERIMENT A

A 1:1 molar mixture of a diglycidyl ether of bisphenol A having an epoxide equivalent weight (EEW) of 181.5 and bisphenol A in 1-methoxy-2-acetoxypropane solvent (80% solids) was placed in a 50 °C oven and the 25 °C viscosity was monitored after 0, 0.3, 1, 7, and 14 days. The results are provided in Table I.

COMPARATIVE EXPERIMENT B

1.18 g of tetrahydrofuran was added to 30.0 g of a 1:1 molar mixture of a diglycidyl ether of bisphenol A having an epoxide equivalent weight (EEW) of 181.5 and bisphenol A in 1-methoxy-2-acetoxypropane solvent (80% solids). This solution was placed in a 50 °C oven and the 25 °C viscosity was monitored after 0, 0.3, 1, 7, and 14 days. The results are provided in Table I.

COMPARATIVE EXPERIMENT C

1.28 g (18 mmol catalyst/equivalent epoxide) of a 30% solution of triphenylphosphine in tetrahydrofuran was added to 30.0 g of 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50 °C oven and the 25 °C viscosity was monitored after 0, 0.3, 1, 7, and 14 days. The results are provided in Table I.

COMPARATIVE EXPERIMENT D

0.986 g (18 mmol catalyst/mol epoxide) of a 30% solution of tributylphosphine in tetrahydrofuran was added to 30.0 g of 1:1 molar mixture of a diglycidyl ether of bisphenol A having an epoxide equivalent weight (EEW) of 181.5 and bisphenol A in 1-methoxy-2-acetoxypropane solvent (80% solids). This catalyzed mixture was placed in a 50 °C oven and the 25 °C viscosity was monitored after 0, 0.3, 1, 7, and 14 days. The results are provided in Table I.

COMPARATIVE EXPERIMENT E

1.005 g (18 mmol catalyst/mol epoxide) of a 30% solution of 1,3-bis(diphenylphosphino)propane was added to 30.0 g of a 1:1 molar mixture of a diglycidyl ether of bisphenol A having an epoxide equivalent weight (EEW) of 181.5 and bisphenol A in 1-methoxy-2-acetoxypropane solvent (80% solids). This solution was placed in a 50 °C and the 25 °C viscosity was monitored after 0, 1, 7, and 14 days. The results are provided in Table I.

TABLE I. Time Versus Viscosity Data

| Ex. or Comp. Expt. | Catalyst | Viscosity; after the indicated days centipoise (Pa•s) | | | | |
|---|---|---|---|---|---|---|
| | | 0 | 0.31 | 1 | 7 | 14 |
| 5 | $Ph_3P$-$HBF_4$ | 678 (0.678) | 720 (0.720) | 826 (0.826) | 3,180 (3.18) | 26,000 (26.0) |
| 6 | $Ph_3P$-$HBF_4$ | 704 (0.704) | --- | 714 (0.714) | 877 (0.877) | 2,500 (2.500) |
| 7 | $nBu_3P$-$HBF_4$ | 611 (0.611) | 619 (0.619) | 631 (0.631) | 729 (0.729) | 857 (0.857) |
| 8 | 1,3-$(Ph_2P)_2$propane-$HBF_4$ | 749 (0.749) | --- | 849 (0.849) | 1,380 (1.380) | 2,210 (2.210) |
| A* | No Additives | 1,111 (1.111) | --- | 1,124 (1.124) | 1,215 (1.215) | 1,340 (1.340) |
| B* | THF Added | 492 (0.492) | --- | 503 (0.503) | 578 (0.578) | 676 (0.676) |
| C* | $Ph_3P$ | 865 (0.865) | 4,718 (4.718) | 192,000 (192.0) | --- | --- |
| D* | n-$Bu_3P$ | 885 (0.885) | 2,251 (2.251) | 15,800 (15.80) | --- | --- |
| E* | 1,3-$(PhP)_2$propane | 967 (0.967) | --- | 11,320 (11.32) | --- | --- |

*Not an example of the present invention.

EXAMPLES 9-12

Each of the initiators described in Examples 1-4 were used to promote the polymerization of a 1:1 molar mixture (295.5 g/equiv. epoxide) of the diglycidyl ether of bisphenol A having an epoxide equivalent weight (EEW) Of 181.5 and bisphenol A. The amount of each catalyst added to 10.00 g of the epoxy/bisphenol mixture was arbitrarily set at 18 equiv. of initiator/epoxide equiv. The equivalent weight of each initiator and the weight of 18 equiv. of the 30% initiator solutions in tetrahydrofuran (THF) were provided in Table II. Also provided in Table II are the glass transition temperatures of the cured samples as determined by differential scanning calorimetry. All the samples were cured at 200°C for 3.5 hours.

COMPARATIVE EXPERIMENTS F-H

30% solutions of triphenylphosphine, tributylphosphine and 1,3-bis(diphenylphosphino)propane in tetrahydrofuran were used to promote the polymerization of 1:1 molar mixtures (295.5 g/equiv. epoxide) of the diglycidyl ether of bisphenol A having an epoxide equivalent weight (EEW) of 181.5 and bisphenol A. The amount of each catalyst added to 10.00 g of the epoxy/bisphenol mixture was arbitrarily set at 18 mequiv. of initiator/epoxide equiv. The equivalent weight of each initiator and the weight of 18 mequiv. of the 30% initiator solutions in tetrahydrofuran are provided in Table II. Also provided in Table II are the glass transition temperatures of the cured samples as determined by differential scanning calorimetry. All the samples were cured at 200 °C for 3.5 hours.

TABLE II. Cured Resin Data

| Example or Comparative Experiment | Initiator | Initiator Equiv. Weight (g/equiv.) | g Initiator/10.00 g epoxy-bisphenol A | Glass Trans. Temp. (°C) |
|---|---|---|---|---|
| 9 | $Ph_3P$-HFB$_4$ (Ex. 1) | 350.1 | 0.711 | 93 |
| 10 | $Ph_3P$-1.1 $HBF_4$ (Ex. 2) | 358.8 | 0.729 | 95 |
| 11 | $Bu_3P$-$HBF_4$ (Ex. 3) | 290.1 | 0.589 | 98 |
| 12 | 1,3-$(Ph_2P)_2$propane-$HBF_4$ (Ex. 4) | 250.1 | 0.508 | 100 |
| F* | $Ph_3P$ | 262.3 | 0.533 | 97 |
| G* | $Bu_3P$ | 202.3 | 0.411 | 103 |
| H* | 1,3-$(Ph_2P)_2$propane | 206.2 | 0.419 | 98 |

*Not an example of the present invention.

## Claims

1. An adduct, complex or compound characterized by (1) contacting (a) at least one organic phosphine or organic arsine with (b) an inorganic acid having a weak-nucleophilic anion or a combination of such

acids; or (2) contacting (a) at least one adduct of an acid having a relatively strong-nucleophilic anion and an organic phosphine or organic arsine with (b) an inorganic acid or metal salt of an inorganic acid, said acid having a weak-nucleophilic anion or a combination of such acids or metal salts; wherein components (a) and (b) are contacted in quantities which provide a molar ratio of component (b) to component (a) of from 0.6:1 to 1.4:1; with the proviso that when component (1-a) is a phosphine, it is a phosphine other than triphenyl phosphine.

2. An adduct, complex or compound of Claim 1 wherein component (a) is an organic phosphine represented by the following formulas III or IV

Formula III.

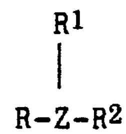

Formula IV.

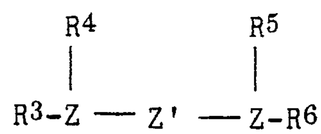

wherein each R, $R^1$, $R^2$, $R^3$, $R^4$, $R^5$ and $R^6$ is independently a hydrocarbyl group having suitably from 1 to 18 carbon atoms or two of such R, $R^1$, or $R^2$ groups or $R^3$ and $R^4$ or $R^5$ and $R^6$ groups can combine to form a heterocyclic ring; and Z is P; Z' is a divalent hydrocarbyl group having from 1 to 10 carbon atoms; and component (b) is fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, Group I or Group II metal salts of such acids, or any combination thereof.

3. An adduct, complex or compound represented by the following Formulas I or II

Formula I.

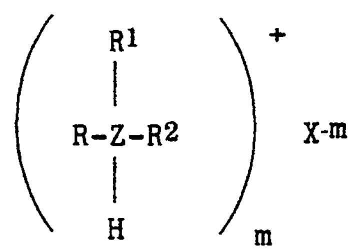

Formula II.

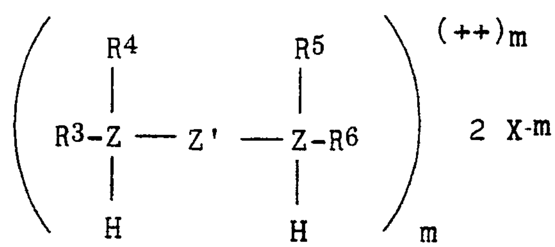

wherein each R, $R^1$, $R^2$, $R^3$, $R^4$, $R^5$ and $R^6$ is independently a hydrocarbyl group having from 1 to 18

carbon atoms or two of such R, $R^1$, or $R^2$ groups or $R^3$ and $R^4$groups or $R^5$ and $R^6$ groups can combine to form a heterocyclic ring; each X is the anion portion of a relatively weak nucleophilic acid; Z is P or As; Z' is a divalent hydrocarbyl group having from 1 to 10 carbon atoms; and m has a value equal to the valence of the anion X; and with the proviso that at least one such R, $R^1$ or $R^2$ group in Formula I is a group other than a phenyl group and with the proviso that at least one such $R^3$, $R^4$, $R^5$ or $R^6$ group in Formula II is a group other than methyl when Z' is a $-CH_2-CH_2-$ group.

4. A composition characterized by (A) at least one compound containing an average of more than one epoxide group per molecule; and (B) at least one of (1) the product resulting from contacting (a) at least one organic phosphine or arsine with (b) an inorganic acid having a weak-nucleophilic anion or a combination of such acids; or (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; wherein (i) components (a) and (b) are contacted in quantities which permit the composition to satisfy the viscosity requirements of the composition after storage at 50 °C for 14 days; and (ii) the mixture of components (A), and (B), when dissolved in 20 to 40 percent by weight of a suitable solvent or solvent mixture, has a viscosity measured at 25 °C of 75% or less than the viscosity of a like composition except that the catalyst consists only of component (a), said viscosity being determined after storage for 14 days at 50 °C.

5. A composition of Claim 4 wherein component (a) is an organic phosphine represented by the following formulas III or IV

Formula III.

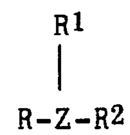

Formula IV.

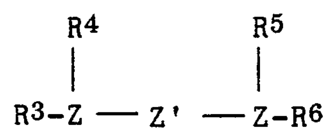

wherein each R, $R^1$, $R^2$, $R^3$, $R^4$, $R^5$ and $R^6$ is independently a hydrocarbyl group having suitably from 1 to 18 carbon atoms or two of such R, $R^1$, or $R^2$ groups or $R^3$ and $R^4$ or $R^5$ and $R^6$ groups can combine to form a heterocyclic ring; and Z is P; Z' is a divalent hydrocarbyl group having from 1 to 10 carbon atoms; and component (b) is fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, Group I or Group II metal salts of such acids, or any combination thereof.

6. A composition characterized by (A) at least one compound containing an average of more than one epoxide group per molecule; (B) at least one catalyst selected from the group consisting of (1) the product resulting from contacting (a) at least one organic phosphine or arsine with (b) an inorganic acid having a weak-nucleophilic anion or a combination of such acids; and (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; and (C) at least one compound containing an average of more than one aromatic hydroxyl group per molecule; wherein (i) components (a) and (b) are contacted in quantities which permit the composition to satisfy the viscosity requirements of the composition after storage at 50 °C for 14 days; (ii) components (A) and (C) are present in quantities which provide a ratio of aromatic hydroxyl groups to epoxide group of from 0.05:1 to 20:1; and (iii) a mixture of components (A), (B), and (C), when dissolved in 20 to 40 percent by weight of a suitable solvent or solvent mixture, has a viscosity measured at 25 °C of 75% or less than the viscosity of a like composition except that the catalyst consists only of component (a), said

viscosity being determined after storage for 14 days at 50 °C.

7. A composition of Claim 6 wherein component (B1a) is an organic phosphine represented by the following formulas III or IV

Formula III.

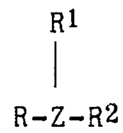

Formula IV.

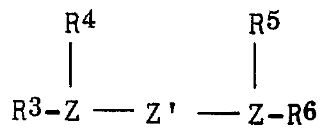

wherein each R, $R^1$, $R^2$, $R^3$, $R^4$, $R^5$ and $R^6$ is independently a hydrocarbyl group having suitably from 1 to 18 carbon atoms or two of such R, $R^1$, or $R^2$ groups or $R^3$ and $R^4$ or $R^5$ and $R^6$ groups can combine to form a heterocyclic ring; and Z is P; Z' is a divalent hydrocarbyl group having from 1 to 10 carbon atoms; and component (C1b) is fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, or any combination thereof.

8. A process for preparing an adduct, complex or compound which characterized by (1) contacting (a) at least one organic phosphine or organic arsine with (b) an inorganic acid having a weak-nucleophilic anion or a combination of such acids; or (2) contacting (a) at least one adduct of an acid having a relatively strong-nucleophilic anion and an organic phosphine or organic arsine with (b) an inorganic acid or metal salt of an inorganic acid, said acid having a weak-nucleophilic anion or a combination of such acids or metal salts; wherein components (a) and (b) are contacted in quantities which provide a molar ratio of component (b) to component (a) of from about 0.6:1 to about 1.4:1; with the proviso that when component (1-a) is a phosphine, it is a phosphine other than triphenyl phosphine.

9. A process for preparing a composition which comprises blending (A) at least one compound containing an average of more than one epoxide group per molecule; and (B) at least one of (1) the product resulting from contacting (a) at least one organic phosphine or arsine with (b) an inorganic acid having a weak-nucleophilic anion or a combination of such acids; or (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; wherein (i) components (a) and (b) are contacted in quantities which permit the composition to satisfy the viscosity requirements of the composition after storage at 50 °C for 14 days; and (ii) the mixture of components (A), and (B), when dissolved in 20 to 40 percent by weight of a suitable solvent or solvent mixture, has a viscosity measured at 25 °C of 75% or less than the viscosity of a like composition except that the catalyst consists only of component (a), said viscosity being determined after storage for 14 days at 50 °C.

10. A process for preparing a composition characterized by blending (A) at least one compound containing an average of more than one epoxide group per molecule; and (B) at least one of (1) the product resulting from contacting (a) at least one organic phosphine or arsine with (b) an inorganic acid having a weak-nucleophilic anion or a combination of such acids; or (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; wherein (i) components (a) and (b) are contacted in quantities which permit the composition to satisfy the viscosity requirements of the composition after storage at 50 ° C for 14 days; and (ii) the mixture of components (A), and (B), when dissolved in 20 to 40 percent by weight of a suitable solvent or solvent mixture, has a viscosity measured at 25 ° C of 75% or less than the viscosity of a like composition except that the catalyst consists only of component (a), said viscosity being determined after storage for 14 days at 50 ° C.

**11.** A process for preparing a composition characterized by blending (A) at least one compound containing an average of more than one epoxide group per molecule; (B) at least one catalyst selected from the group consisting of (1) the product resulting from contacting (a) at least one organic phosphine or arsine with (b) an inorganic acid having a weak-nucleophilic anion or a combination of such acids; and (2) the product resulting from contacting (a) at least one adduct of an acid having a relatively strong-nucleophilic anion and an organic phosphine or arsine compound with (b) an inorganic acid or metal salt of an inorganic acid, said acid having a weak-nucleophilic anion or a combination of such acids or metal salts; and (C) at least one compound containing an average of more than one aromatic hydroxyl group per molecule; wherein (i) components (a) and (b) are contacted in quantities which permit the composition to satisfy the viscosity requirements of the composition after storage at 50 ° C for 14 days; (ii) components (A) and (C) are present in quantities which provide a ratio of aromatic hydroxyl groups to epoxide group of from about 0.05:1 to about 20:1; and (iii) a mixture of components (A), (B), and (C), when dissolved in 20 to 40 percent by weight of a suitable solvent or solvent mixture, has a viscosity measured at 25 ° C of 75% or less than the viscosity of a like composition except that the catalyst consists only of component (a), said viscosity being determined after storage for 14 days at 50 ° C.